# EUROPÄISCHE PATENTANMELDUNG

(11) **EP 1 803 359 A1**
(43) Veröffentlichungstag der Anmeldung: **04.07.2007**
(21) Anmeldenummer: 06026448.8
(22) Anmeldetag: 20.12.2006
(51) Int. Cl.: A23L 1/307, A23L 1/317, A23C 9/20, A23K 1/18

(54) **Verfahren zur Herstellung von weitgehend naturbelassenen, energie- und nährwerteinstellbaren sowie Laktoseintoleranz verhindernden Lebensmittel**

(30) Priorität: 20.12.2005 DE 102005060945
(71) Anmelder: Laufer, Ingeborg, 82319 Starnberg (DE)
(72) Erfinder: Laufer, Ingeborg, 82319 Starnberg (DE)
(74) Vertreter: Forstmeyer, Dietmar

(57) **Zusammenfassung**

Die vorliegende Erfindung betrifft ein Verfahren zur Herstellung von Laktoseintoleranz verhindernden oder vermindernden Nahrungsmitteln auf der Basis von Milch, Milchderivaten und/oder Milchprodukten auf pflanzlicher Basis und Fleisch oder einem Fleischerzeugnis, wobei die Milch, Milchderivate und/oder Milchprodukte auf pflanzlicher Basis laktosefrei bzw. laktosereduziert sind und das Fleisch bzw. das Fleischerzeugnis ohne die Verwendung von chemisch, physikalisch oder physikochemisch bearbeiteten oder hergestellten Ausgangsstoffen und ohne Bindemittel, Emulgatoren, Dickungsmittel oder dgl. hergestellt wird und diese Zutaten in einem Kutter bearbeitet und emulgiert werden.

## Beschreibung

### Gebiet der Erfindung

Die Erfindung betrifft ein Verfahren zur Herstellung von weitgehend naturbelassenen energie- und nährwerteinstellbaren, Laktoseintoleranz verhindernden Nahrungsmitteln, die mittels einer schonenden, als MMS-Technologie bezeichneten Herstellungstechnologie produziert werden.

### Hintergrund der Erfindung

Bezüglich des Ernährungszustandes der Bevölkerung in den meisten Industrieländern kann man feststellen, daß
1. weiterhin eine energetische Überernährung stattfindet,
2. eine unzureichende Deckung des Bedarfs an essentiellen Nährstoffen im Rahmen der normalen Tagesernährung vorliegt und
3. eine Belastung durch unerwünschte Inhaltstoffe, insbesondere Lebensmittelzusatzstoffe, in der Nahrung vorliegt, die gesundheitsschädlich sind und z.B. Allergien verschiedenster Art erzeugen können.

Es ist weiterhin festzustellen, daß diese Entwicklung, die vorzugsweise aus einer Fehl- und Überernährung resultiert, zu einer Minderung der Lebensqualität und der Lebenserwartung und Krankheiten wie Adipositas, Übergewicht, Arteriosklerose, cardiovaskuläre Erkrankungen, essentielle Hypertonie, Diabetes, Fettleber, chronische Hepatitis, Leberzyrrhose und weitere Erkrankungen zur Folge haben kann.

Die normalen Fleischsorten enthalten im Durchschnitt 17-18 % Fett. Erfindungsgemäß können dagegen schmackhafte Produkte auch mit Fettgehalten von 4-10 % ohne weiteres hergestellt werden.

Die Mortalitätsquote der Bürger als Verbraucher und Patienten hat sich in den letzten Jahren kaum reduziert, was an und für sich nach der Verbesserung der medizintechnischen Möglichkeiten und der ärztlichen Behandlungskunst zu erwarten wäre.

Es ist daher wünschenswert, fettreduzierte und ernährungsphysiologisch hochwertige Nahrungsmittelprodukte zu entwickeln und auf den Markt zu bringen. Aus EP 0 172 245, dessen Offenbarung hiermit in die vorliegende Anmeldung aufgenommen wird, ist es bekannt, energie- und nährwerteinstellbare Lebensmittel auf der Basis von Milch oder Milcherzeugnissen und Fleisch oder Fleischerzeugnissen mit Hilfe der sogenannten MMS-Technologie herzustellen. Es ist aber bisher nicht möglich, solche wünschenswerten Lebensmittel herzustellen, die für Menschen mit Laktoseintoleranz geeignet sind.

In Mitteleuropa leiden ca. 10% bis 20% der Bevölkerung an einer Laktoseintoleranz. Weltweit liegt der Anteil der Menschen, die Laktose nach dem Säuglingsalter nicht mehr vollständig verwerten können, bei ca. 80%. Betroffen sind insbesondere Menschen aus Asien und Afrika. Die Ursache für Laktoseunverträglichkeit liegt in einem Mangel an dem Enzym Laktase, welches Laktose im Darm abbaut. Dadurch gelangt die Laktose in den Dickdarm und wird dort von der Darmflora als Nährstoff fermentiert. In der Folge kommt es zu Völlegefühl, Blähungen, krampfartigen Bauchschmerzen und häufig auch zu Durchfällen. Anhaltende Laktosebelastung führt zu Reizung der Darmschleimhaut mit erhöhter Infektionsgefahr und Störung der Aufnahme von Vitaminen, Mineralstoffen und Spurenelementen. Laktasemangel, sofern er genetisch bedingt ist, ist nicht behandelbar. Vielmehr muss die Ernährung auf laktosearme bzw. -freie Kost umgestellt werden.

### Zusammenfassung und Beschreibung der Erfindung

Es ist somit eine Aufgabe der vorliegenden Erfindung, auf der Basis von laktosefreier bzw. laktosereduzierter Milch, Milchderivaten und/oder Milchprodukten auf pflanzlicher Basis und Fleisch bzw. Fleischerzeugnissen und gegebenenfalls Salz und Gewürzen verbesserte ernährungsphysiologisch hochwertige Lebensmittelprodukte herzustellen, die auch von Menschen mit Laktoseintoleranz bedenkenlos verzehrt werden können.

Gelöst wird diese Aufgabe durch ein Verfahren zur Herstellung von Laktoseintoleranz verhindernden oder vermindernden Lebensmitteln auf der Basis von Milch, Milchderivaten und/oder Milchprodukten auf pflanzlicher Basis und Fleisch oder einem Fleischerzeugnis, wobei die Milch, Milchderivate und/oder Milchprodukte auf pflanzlicher Basis laktosefrei bzw. laktosereduziert sind und das Fleisch bzw. das Fleischerzeugnis ohne Bindemittel, Emulgatoren, Dickungsmittel oder dgl. hergestellt wird und diese Zutaten in einem Kutter bearbeitet und emulgiert werden.

Vorzugsweise wird das Fleisch bzw. das Fleischerzeugnis ohne die Verwendung von chemisch, physikalisch oder physiko-chemisch bearbeiteten oder hergestellten Ausgangsstoffen hergestellt.

Die Ansprüche 2 bis 11 sind auf bevorzugte Ausführungsformen gerichtet.

Die erfindungsgemäß hergestellten Lebensmittel sind gemäß einer bevorzugten Ausführungsform weitgehend naturbelassenen, wobei ihr Energie- und Nährwert einstellbar ist.

Erfindungsgemäß sind weitere bevorzugte Ausführungsformen vorgesehen, die einzeln oder in Kombination zum Einsatz kommen können:
- Es können zusätzlich Obst, Obsterzeugnisse, Gemüse, Gemüseerzeugnisse und/oder Getreideerzeugnisse eingesetzt werden. Dadurch kann der Nährwert und insbesondere der Gehalt an Vitaminen und Ballaststoffen ergänzt bzw. eingestellt werden.
- Es kann zusätzlich mindestens ein Salz und/oder ein Gewürz eingesetzt werden. Dadurch kann der Gehalt an Mineralien ergänzt bzw. eingestellt werden und der Geschmack verbessert werden.
- Die Milch, Milchderivate und/oder Milchprodukte auf pflanzlicher Basis können in gefrorenem Zustand eingesetzt werden. Gefrorene Milch, Milchderivate und/oder Milchprodukte auf pflanzlicher Basis sind besser haltbar, weniger mit Keimen etc. belastet und sorgen zusätzlich für kohärente Bindungskräfte im Produkt. Ferner wird das Fleisch bzw. das Fleischerzeugnis zusätzlich gekühlt und ist somit ebenfalls länger haltbar.
- Das Milchprodukt auf pflanzlicher Basis kann z.B.Sojamilch sein. Dadurch können weitere ernährungsphysiologische Vorteile erzielt werden, insbesondere daß das Produkt auch für Personen zugänglich ist, die neben Laktoseintoleranz unter weiteren Milchunverträglichkeiten, wie z.B. Unverträglichkeit gegenüber Milchproteinen, leiden.
- Das Verhältnis nach Gewicht von Milch, Milchderivaten und/oder Milchprodukten auf pflanzlicher Basis zu Fleisch bzw. Fleischerzeugnis kann 98:2 bis 2:98 betragen.
- Das Verhältnis nach Gewicht von Milch, Milchderivaten und/oder Milchprodukten auf pflanzlicher Basis zu Fleisch bzw. Fleischerzeugnis kann 49:51 bis 2:98 betragen. Vorzugsweise beträgt das Verhältnis nach Gewicht 40:60 bis 20:80, am bevorzugten ca. 30:70.
- Bezogen auf die Milch, Milchderivate und/oder Milchprodukte auf pflanzlicher Basis und das Fleisch bzw. das Fleischerzeugnis können 5 - 20 Gew.-% einer Schwarte eingesetzt werden. Die Schwarte kann eine Schwartenverarbeitung in unterschiedlicher Körnung, eine Schwartenemulsion oder eine Schwarten-/Milchemulsion umfassen, wobei die Mengenanteile von Schwarte und Milch vorzugsweise hälftig angesetzt werden. Auch hierdurch wird es möglich, den Energie- und Nährwert des Lebensmittels einzustellen. Ferner kann auf diese Weise bei der Herstellung auch gekühltes oder gefrorenes Fleisch eingesetzt werden, ohne daß der Geschmack der Produkte darunter leidet.
- Vorzugsweise kann Magermilch mit einem Fettgehalt von 1,5 bis 2 Gew.-% eingesetzt werden. Dadurch kann der Fettgehalt des Lebensmittels reduziert werden.
- Zusätzlich können ernährungsphysiologisch geeignete Pflanzenöle oder Pflanzenölmischungen in einem Anteil von bis zu 5 Gew.-% der Gesamtemulsion bzw. des gesamten Lebensmittels eingesetzt werden. Hierdurch kann der Nährwert des Lebensmittels erhöht werden.

Des weiteren betrifft die Erfindung Lebensmittel, die nach einem der oben beschrieben Verfahren herstellbar sind.

Durch diese erfindungsgemäße Herstellungstechnologie kann eine breitgefächerte Produktgruppe von Lebensmitteln auf Milch-/ Fleischbasis erzeugt werden. Eine wichtige Verbesserung ist die Verwendung von laktosefreier bzw. laktosereduzierter Milch, Milchderivaten und/oder Milchprodukten auf pflanzlicher Basis, die diese Lebensmittel auch für Verbraucher mit Laktoseintoleranz zugänglich macht. Daß die Verwendung von laktosefreier bzw. laktosereduzierter Milch, Milchderivaten und/oder Milchprodukten auf pflanzlicher Basis die Herstellung von Lebensmitteln mit hervorragendem Geschmack, Textur und Konsistenz ermöglicht, ist insofern überraschend, als Laktose häufig als Trägersubstanz für Aromen oder als Emulgator in Wurst eingesetzt wird. Durch die daraus resultierende Volumenzunahme ergibt sich ein besserer Verteilungsgrad im Brät. Dieser Effekt wird erfindungsgemäß bereits allein durch die verwendete MMS-Technologie erzielt, so daß auf einen Zusatz von Laktose verzichtet werden kann.

Besondere Vorteile der vorliegenden Erfindung konnten neben der Verwendung von laktosefreier bzw. laktosereduzierter Milch, Milchderivaten und/oder Milchprodukten auf pflanzlicher Basis auch durch die Verwendung von Schwarten- bzw. Bindegewebs-Emulsion erzielt werden.

Milchderivate nach der vorliegenden Erfindung sind insbesondere Milchpulver, Molke und Joghurt.

Als Beispiel für ein Milchprodukt auf pflanzlicher Basis ist insbesondere Sojamilch anzuführen.

Erfindungsgemäß enthalten laktosefreie bzw. laktosereduzierte Milch, Milchderivate und/oder Milchprodukte auf pflanzlicher Basis weniger als 2,5 Gew.-% Laktose, bevorzugt weniger als 1,0 Gew.-% Laktose, bevorzugter weniger als 0,5 Gew.-% Laktose, am bevorzugten weniger als 0,1 Gew.-% Laktose.

Das erfindungsgemäße Verfahren verzichtet auf die Zugabe von **Bindemitteln,** insbesondere Citronensäure und Salze davon, Phosphorsäure und Salze davon und Mischungen davon, **Emulgatoren**, insbesondere Ammoniumphosphatide, Ascorbylpalmitat, Calciumstearoyl-2-lactylat, Diphosphate, Fettsäuren und Salze bzw. Ester davon, Lecithin, Mono- und Diglyceride von Speisefettsäuren, Natriumstearoyl-2-lactylat, Phosphorsäure und Salze davon, Polyglycerin-Polyricinoleat, Polyoxyethylen (40) stearat, Polyphosphate, Polysorbate, Propylenglycolalginat, Hydroxypropylmethylcellulose, Sorbitanmonofettsäureester, Sorbitantristearat, Triphosphate, Zuckerglyceride und Mischungen davon, **Dickungsmittel**, insbesondere Alginsäure und deren Salze, Agar-Agar, Carragen, Cellulose und Derivate davon, Gellan, Guarkernmehl, Gummi arabicum, Johannisbrotkernmehl, Karaya, Pektin und Derivate davon, modifizierte Stärke, Tarakernmehl, Traganth, Xanthan und Mischungen davon oder dergleichen. Vorteile von Lebensmitteln, die frei von derartigen Zusatzstoffen sind, sind insbesondere eine bessere Verträglichkeit der Produkte, insbesondere für Personen, die unter Allergien leiden, und eine geringere Belastung des Organismus durch diese Zusatzstoffe.

Obst nach der vorliegenden Erfindung sind insbesondere Nüsse, Pistazien, Mandeln, Kastanien, Rosinen, Äpfel und Mischungen davon.

Obsterzeugnisse nach der vorliegenden Erfindung sind insbesondere Aromen, Extrakte, Pülpen und sonstige Verarbeitungsprodukte von Obst.

Gemüse nach der vorliegenden Erfindung ist insbesondere Broccoli, Gurke, Kartoffeln, Knoblauch, Kohlrabi, Kresse, Meerrettich, Möhren, Oliven, Paprika, Pilze, Rettich, Rote Rübe, Rosenkohl, Spinat, Tomate, Zucchini, Zwiebel und Mischungen davon.

Gemüseerzeugnisse nach der vorliegenden Erfindung sind insbesondere Aromen, Extrakte, Pülpen und sonstige Verarbeitungsprodukte von Gemüse.

Getreideerzeugnisse nach der vorliegenden Erfindung sind insbesondere Cerealien, wie z.B. Weizen, Reis, Mais, Roggen, Gerste, Soja, Hafer, Hirse und Mischungen davon bzw. Verarbeitungsprodukte davon.

Salze nach der vorliegenden Erfindung sind insbesondere Speisesalz, Meersalz, Siedesalz, Himalayasalz und Mischungen davon.

Gewürze nach der vorliegenden Erfindung sind insbesondere Anis, Basilikum, Bohnenkraut, Chillies, Curcuma, Dill, Dost, Estragon, Fenchel, Ingwer, Kapern, Kardamom, Kerbel, Knoblauch, Koriander, Kümmel, Liebstöckel, Lorbeer, Macis, Majoran, Melisse, Meerrettich, Mohn, Muskat, Oregano, Paprika, Pastinak, Petersilie, Pfeffer, Piment, Quendel, Rosmarin, Salbei, Schnittlauch, Sellerie, Senf, Sesam, Thymian, Trüffel, Wacholder, Zwiebel und Mischungen davon.

Zu den erfindungsgemäßen ernährungsphysiologisch geeigneten Pflanzenölen zählen insbesondere Avocadoöl, Erdnußöl, Haselnußöl, Kürbisöl, Leinöl, Olivenöl, Palmkernöl, Palmöl, Rapsöl, Sesamöl, Sojaöl, Sonnenblumenöl, Traubenkernöl, Walnußöl, Weizenkeimöl und Mischungen davon.

Erfindungsgemäß sollen die Ausgangsstoffe nicht chemisch, physikalisch oder physiko-chemisch bearbeitet oder hergestellt werden. Darunter fällt insbesondere die Vermeidung von Füllstoffen und Konservierungsmitteln, insbesondere Benzoesäure und Salze davon, Essigsäure und Salze davon, Gallate, Hexamethylentetramin, Milchsäure und Salze davon, Nitrate und Nitrite, PHB-Ester und Salze davon, Salze der Orthophosphorsäure, Phosphorsäure und Salze davon, Propionsäure und Salze davon, Schwefeldioxid und Sulfite, Sorbinsäure und Salze davon sowie Mischungen davon. Das bringt den Vorteil mit sich, daß die Produkte naturbelassen sind und somit für Allergiker besser geeignet sind.

Erfindungsgemäß ist es bevorzugt, zusätzlich Bindegewebsund/oder Schwarten-Milch-Emulsion zuzugeben. Hierdurch kann eine weitere Verbesserung und Vereinfachung des in EP 0 172 245 offenbarten Verfahrens erzielt werden. Auf diese Weise kann bei der Herstellung auch gekühltes oder gefrorenes Fleisch eingesetzt werden, ohne daß der Geschmack der Produkte darunter leidet, während mit dem in EP 0 172 245 offenbarten Verfahren ausschließlich frisches Fleisch verwendet werden konnte, d.h. Fleisch, das von Tieren stammt, die vor höchstens 24 Stunden geschlachtet wurden.

Die Zusammensetzung und der Kaloriengehalt der erfindungsgemäßen Zubereitungen kann durch die Wahl und Bearbeitung der Ausgangsstoffe wunschgemäß programmiert werden, so daß Produkte mit unterschiedlichsten gezielten Brennwerten und einer optimalen Kombination von hohem Genuss- und Nährwert sowie mit einer verbesserten Haltbarkeit und einem vorteilhaften Gebrauchswert hergestellt werden können.

So können insbesondere die in großem Umfang hergestellten Burger-Patties und Döner-Produkte hergestellt werden, die im Gegensatz zu den bekannten Produkten leichter zubereitet, viel einfacher transportiert und gastronomisch verarbeitet werden können.

Die nach der erfindungsgemäßen Technologie hergestellten Produkte eignen sich auch insbesondere für gesundheitspolitische Massnahmen, da diese zur Vorsorge im Rahmen einer primärpräventiven Gesundheitssicherung und -Erziehung gezielt eingesetzt werden können und somit von wesentlicher volkswirtschaftlicher Bedeutung sind.

Die erfindungsgemäße Technologie lässt sich auch in besonders vorteilhafter Weise für die Herstellung neuartiger Futtermittel für vornehmlich carnivore Fischarten, wie z.B. Lachs, Forelle, aber auch für andere auf Protein angewiesene Zuchttiere, wie z.B. Geflügel unter Verwendung von laktosefreier bzw. laktosereduzierter Milch, Milchderivaten und/oder Milchprodukten auf pflanzlicher Basis als vollständiger oder teilweiser Ersatz von Fischmehl und Fischöl verwenden. Milch hat eine ähnliche Aminosäurezusammensetzung wie Fischmehl und ist daher ernährungsphysiologisch ein weitestgehend vollwertiger Ersatz für Fischmehl. Da Fische ebenso wie andere Wirbeltiere unter Laktoseintoleranz leiden können, ist vornehmlich die Verwendung von laktosefreier bzw. laktosereduzierter Milch, Milchderivaten und/oder Milchprodukten auf pflanzlicher Basis sinnvoll.

Die nach dem erfindungsgemäßen Verfahren hergestellten Futtermittel lassen sich insbesondere für die sich jetzt im großen Ausmaße entwickelten Aquakultur verwenden. Dabei kann sowohl bei der Verfütterung an Süßwasserfisch-Aquakulturen als auch an Meeresfisch-Aquakulturen eine viel bessere Verwertungsausbeute erreicht werden.

Herkömmliches Fischfutter für carnivore Fische besteht in der Regel aus ca. 60 - 70 Gew.-% Fischmehl, 5 - 20 Gew.-% Fischöl, 15 - 30 Gew.-% Erzeugnissen aus Getreide, Soja und Ölsaaten und in geringen Mengen Futterzusatzstoffe wie Vitamine und Mineralstoffe. Das Fischmehl/-öl stammt überwiegend aus der industriellen Hochseefischerei. Hierbei wird ca. 4 kg Meeresfisch für die Produktion von 1 kg Zuchtfisch benötigt. Aufgrund des starken Wachstums der Aquakultur einerseits und der heute bereits vielerorts bedrohten Wildfischbestände zur Fischmehlproduktion andererseits ist eine alternative Proteinquelle für Fischmehl in Fischfuttermitteln unerlässlich.

In den folgenden Beispielen werden bevorzugte Ausführungsformen des Verfahrens und der Produkte nach der Erfindung im einzelnen erläutert:

### Beispiel 1:

Herstellung von MMS-Produkten in Art von Brühwurst, Fleischkäs und Aufschnitt.
30 kg gefrorene laktosefreie Magermilch (pasteurisiert und homogenisiert) werden gefroren und je nach Bedarf zerkleinert. Dieses Produkt kann auch mit einer Eis-Maschine in die Form von Milcheis gebracht werden.

Falls erwünscht, können dieser homogenen Mischung vor dem Gefrieren spezielle Öle und Fette zugesetzt werden in einer Menge von beispielsweise 3 bis 6 kg. In diesem Falle wird die Masse so lange bei Temperaturen zwischen etwa 20 - 30 °C gemischt, bis eine homogene Emulsion entstanden ist.

Parallel dazu werden 60 kg Fleisch (Rindfleisch, Schweinefleisch, Geflügelfleisch, Lammfleisch oder dergleichen) gewolft und mit den erwünschten natürlichen Gewürzen (ohne jegliche Emulgatoren, Bindemittel, Stabilisierungsmittel udgl.) gründlich vermischt.

In einem abschliessenden Verfahrensschritt werden die gekühlte Fleischmischung und die gefrorene Milch in einen Kutter gegeben und gründlich emulgiert.

Die so hergestellte Masse, also das Grundbrät, wird in üblicher Weise weiter verarbeitet bzw. abgefüllt und abgepackt.

In einer bevorzugten Ausführungsform werden 10 kg des 60 kg Fleischanteiles durch eine Schwarten- oder eine Schwarten-/ Magermilchemulsion ersetzt. Diese modifizierte Verfahrensweise empfiehlt sich, wenn man einen höheren Bindegewebs- bzw. Kollagenanteil haben möchte oder wenn bei der Herstellung nicht frisch geschlachtetes Fleisch oder relativ frisches Fleisch verwendet wird, sondern vorher stark gekühltes oder gefrorenes Fleisch, dessen Geschmackskomponenten bekannterweise reduziert sind.

Die Schwartenemulsion kann in verschiedener Körnung bzw. Feinheit je nach Art des Produktes hergestellt werden. Im Prinzip handelt es sich z.B. um eine Rohschwartenemulsion, die aus 5 kg Schwarte und einer Schüttung von 5 kg Eis und Lake hergestellt wird.

In einer besonderen Modifikation lässt man die 5 kg Schwarte in einer 10%-igen Lake quellen (24 Stunden), dann wird die Lake angefroren und mit 5 kg laktosefreier Milch versetzt, vermischt und gefroren. Diese Schwartenemulsion wird dann dem Fleischanteil zugegeben.

Bei etwas groberen Produkten können die gewaschenen Schwarten auf kleine Partikel mit einer Kantenlänge von 1 mm zerkleinert werden und dann dem Produkt zugegeben werden. Diese Modifikation eignet sich insbesondere bei groben Wurstprodukten.

### Beispiel 2:

### Herstellung von MMS-Produkten in Art von Grill- und Bratprodukten, Bratwurst, Bierschinken, Pattys und Döner-Kebap.

Bei diesen Produkten wird mit einem erhöhten Fleischanteil gearbeitet, der sich aus den Zutaten ergibt, wie z. B. Schweinefleisch gewürfelt und vorgesalzen (5 kg Schnitzelfleisch auf den Fleischanteil) (Rinderzunge gekocht 10 kg auf den Fleischanteil).

### Beispiel 3:

### MMS-Produkt in Art einer Leberwurst, Leberpastete oder Lebercreme.

Bei der Herstellung dieses Produktes werden 6 kg des 60 kg Fleischanteiles durch Schweineleber roh ersetzt und wie in Beispiel 1 grundsätzlich verarbeitet.

### Beispiel 4:

### MMS-Produkt in Art einer Fischwurst Surimi oder Krebstier-Pastete.

Bei dieser Verfahrensvariation können 20 bis 30 kg des 60 kg Fleisch-Anteiles durch Krabben-, Garnelen-, Krebs- oder Hummerfleisch oder Extrakten oder Teilen dieser Meerestiere ersetzt werden. Für die Fischpastete oder Fischwurst werden dementsprechend 10 bis 30 kg vorzugsweise gewässertes Seefisch-Filet mit Kochsalz und Gewürzen versetzt im Kutter gründlich vermischt. Dann wird in üblicher Weise gebrüht und weiterverarbeitet.

### Beispiel 5:

### MMS-Produkt in Art eines Brotaufstriches, einer Kräuterpastete, eines Kinder-Brotaufstriches mit Kakao und Honig.

In dieser Produktvariation werden die speziellen Zutaten in der erwünschten Menge zugesetzt und vorzugsweise zusätzlich mit etwa 5 kg Sonnenblumenöl, einem anderen Öl oder einem anderen Öl-Gemisch versetzt.

### Beispiel 6:

### Herstellung von MMS-Produkten als Mastfutter für Salmoniden.

Zutatenliste: laktosefreies Milchpulver bzw. Milchderivate (55 Gew.-%), Fischproteinkonzentrat (5 Gew.-%), Fischöl (1,5 Gew.-%), Rapsöl oder Leinsamenöl (1,5 Gew.-%), Weizenmehl (auch fermentiert) (22 Gew.-%), Sojamehl (10 Gew.-%), Presshilfsmittel (2,5 Gew.-%), Vitaminmix (1,25 Gew.-%), Mineralienmix (1,25 Gew.-%)

Zunächst werden die Zutaten in einer Mühle zu einer Partikelgröße kleiner 500 µm vermahlen. Das Mahlen verbessert die Mischfähigkeit der Zutaten und die Nährstoffverdaubarkeit für die Fische.

Anschließend wird durch Mischen eine homogene Zusammensetzung sichergestellt. Das Milchpulver kann auch erst in diesem Schritt zugegeben werden.

Es folgt eine Verdichtung der Zutaten, indem diese mechanisch durch eine Pressform gedrückt werden. Bei der Pelletierung unterscheidet man 3 Verfahrensweisen, die maßgeblich die Eigenschaften der Pellets sowie deren Bioverfügbarkeit beeinflussen. Man erhält je nach Verfahren komprimierte, expandierte bzw. extrudierte Pellets.

Als Salmonidenfutter kommen in erster Linie extrudierte Pellets mit einem hohen Protein- und Fettgehalt in Frage, die ferner eine gute Wasserabsorption und eine hohe Wasserstabilität aufweisen und in Salzwasser langsam absinken. Beim Extrusionsprozess handelt es sich im wesentlichen um einen Kochprozess, bei dem die stärkehaltigen Komponenten aufgeschlossen und die Proteine denaturiert werden. Hierbei wird eine hydrophile, aber stabile Matrix verwendet.

Die Futterzutaten werden mit Dampf behandelt, um den Feuchtigkeitsgehalt auf 20 - 30 Gew.-% und die Temperatur auf 65 - 95 °C zu bringen. Man spricht hierbei von einer Vorkonditionierung. Die Mixtur wird dann im Extruder unter Druck durch mechanische Bearbeitung weiter erwärmt, um Temperaturen von 120 - 140 °C zu erreichen. Durch Beeinflussung des Dampfdruckes kann in diesem Schritt das Sink- und Schwimmverhalten der Pellets über einen weiten Bereich reguliert werden. Langsam sinkende Pellets mit einer Dichte von ca. 0,25 - 0,3 g/cm³ sind als Salmonidenfutter am besten geeignet.

Die heiße Produktschmelze wird anschließend entspannt, geformt und geschnitten. Sobald die heiße Masse den Extruder verlässt, verdampft ein Teil des Wassers. Dies führt zu einer Zunahme von Volumen und Porosität der Produktmasse.

Die Produkte werden dann auf eine Endfeuchtigkeit von 8 - 10 Gew.-% getrocknet. Die getrockneten Extrudate werden dann im warmen Zustand direkt nach der Trocknung mit dem Fischöl und dem Rapsöl besprüht. Hier können auch noch weitere Zusätze, wie Geschmackstoffe, Lockstoffe, Antioxidantien udgl. hinzugefügt werden.

## Patentansprüche

1. Verfahren zur Herstellung von Laktoseintoleranz verhindernden oder vermindernden Lebensmitteln auf der Basis von Milch, Milchderivaten und/oder Milchprodukten auf pflanzlicher Basis und Fleisch oder einem Fleischerzeugnis, **dadurch gekennzeichnet, daß** die Milch, Milchderivate und/oder Milchprodukte auf pflanzlicher Basis laktosefrei bzw. laktosereduziert sind und das Fleisch bzw. das Fleischerzeugnis ohne die Verwendung von chemisch, physikalisch oder physiko-chemisch bearbeiteten oder hergestellten Ausgangsstoffen und ohne Bindemittel, Emulgatoren, Dickungsmittel oder dgl. hergestellt wird und diese Zutaten in einem Kutter bearbeitet und emulgiert werden.

2. Verfahren nach Anspruch 1, **dadurch gekennzeichnet, daß** zusätzlich Obst, Obsterzeugnisse, Gemüse, Gemüseerzeugnisse und/oder Getreideerzeugnisse eingesetzt werden.

3. Verfahren nach einem der vorangehenden Ansprüche, **dadurch gekennzeichnet, daß** zusätzlich mindestens ein Salz und/oder mindestens ein Gewürz eingesetzt wird.

4. Verfahren nach einem der vorangehenden Ansprüche, **dadurch gekennzeichnet, daß** die Milch , Milchderivate und/oder Milchprodukte auf pflanzlicher Basis in gefrorenem Zustand eingesetzt werden.

5. Verfahren nach einem der vorangehenden Ansprüche, **dadurch gekennzeichnet, daß** das Milchprodukt auf pflanzlicher Basis Sojamilch ist.

6. Verfahren nach einem der vorangehenden Ansprüche, **dadurch gekennzeichnet, daß** das Verhältnis nach Gewicht von Milch, Milchderivaten und/oder Milchprodukten auf pflanzlicher Basis zu Fleisch bzw. Fleischerzeugnis 98:2 bis 2:98 beträgt.

7. Verfahren nach einem der vorangehenden Ansprüche, **dadurch gekennzeichnet, daß** das Verhältnis nach Gewicht von Milch, Milchderivaten und/oder Milchprodukten auf pflanzlicher Basis zu Fleisch bzw. Fleischerzeugnis 49:51 bis 2:98 beträgt.

8. Verfahren nach einem der vorangehenden Ansprüche, **dadurch gekennzeichnet, daß** bezogen auf die Milch, Milchderivate und/oder Milchprodukte auf pflanzlicher Basis und das Fleisch bzw. das Fleischerzeugnis 5 - 20 Gew.-% einer Schwarte eingesetzt werden.

9. Verfahren nach Anspruch 8, **dadurch gekennzeichnet, daß** die Schwarte eine Schwartenverarbeitung in unterschiedlicher Körnung, eine Schwartenemulsion oder eine Schwarten-/Milchemulsion umfaßt, wobei die Mengenanteile von Schwarte und Milch vorzugsweise hälftig angesetzt werden.

10. Verfahren nach einem der vorangehenden Ansprüche, **dadurch gekennzeichnet, daß** vorzugsweise Magermilch mit einem Fettgehalt von 1,5 bis 2 Gew.-% eingesetzt wird.

11. Verfahren nach einem der vorangehenden Ansprüche, **dadurch gekennzeichnet, daß** zusätzlich ernährungsphysiologisch geeignete Pflanzenöle oder Pflanzenölmischungen in einem Anteil von bis zu 5 Gew.-% der Gesamtemulsion eingesetzt werden.

12. Lebensmittel, herstellbar nach einem Verfahren nach einem der Ansprüche 1-11.

13. Verfahren zur Herstellung von Laktoseintoleranz verhindernden oder vermindernden Futtermitteln auf der Basis von Milch, Milchderivaten und/oder Milchprodukten auf pflanzlicher Basis als Ersatz von Fischmehl und Fischöl, **dadurch gekennzeichnet, daß** die Milch, Milchderivate und/oder Milchprodukte auf pflanzlicher Basis laktosefrei bzw. laktosereduziert sind.

14. Verfahren zur Herstellung von Laktoseintoleranz verhindernden oder vermindernden Futtermitteln auf der Basis von Milch, Milchderivaten und/oder Milchprodukten auf pflanzlicher Basis als teilweiser Ersatz von Fischmehl und Fischöl, **dadurch gekennzeichnet, daß** die Milch, Milchderivate und/oder Milchprodukte auf pflanzlicher Basis laktosefrei bzw. laktosereduziert sind.

15. Verfahren nach einem der Ansprüche 13 und 14, wobei das Futtermittel Fischfutter ist.

16. Futtermittel, herstellbar nach einem Verfahren nach einem der Ansprüche 13 und 14.

17. Fischfutter, herstellbar nach einem Verfahren nach einem der Ansprüche 13 bis 15.
